# EUROPÄISCHE PATENTSCHRIFT

(11) **EP 3 771 322 B1**
(45) Veröffentlichungstag und Bekanntmachung des Hinweises auf die Patenterteilung: **01.09.2021**
(21) Anmeldenummer: 20187184.5
(22) Anmeldetag: 22.07.2020
(51) Int. Cl.: A01D 69/03, F15B 11/16

(54) **LANDWIRTSCHAFTLICHE MASCHINE**
AGRICULTURAL MACHINE
ENGIN AGRICOLE

(30) Priorität: 31.07.2019 DE 102019120638
(43) Veröffentlichungstag der Anmeldung: 03.02.2021
(73) Patentinhaber: PÖTTINGER Landtechnik GmbH, 4710 Grieskirchen (AT)
(72) Erfinder: Ehrentraut, Michael, 4710 Grieskirchen (AT); Weissenböck, Thomas, 4710 Grieskirchen (AT); Hofinger, Markus, 4710 Grieskirchen (AT)
(74) Vertreter: Thoma, Michael

(56) Entgegenhaltungen:
- EP-A1- 2 871 370
- DE-A1- 3 709 504
- DE-A1-102006 032 599

## Beschreibung

Die vorliegende Erfindung betrifft eine landwirtschaftliche Maschine mit zumindest einem hydraulischen Aktor, der von einem Hydraulikkreis druckbeaufschlagbar ist, der eine Lastfühl-Leitung aufweist, sowie einer Steuereinrichtung zum Steuern des Volumenstroms zum/im Hydraulikkreis in Abhängigkeit eines Drucks in der Lastfühl-Leitung.

Landwirtschaftliche Maschinen mit Hydraulikantrieben bzw. Hydraulikaktoren werden oft mit hydraulischen Steuerungssystemen betrieben bzw. daran angeschlossen, welche eine Druck- und Volumenstromanpassung an die momentanen Anforderungen der Verbraucher vornehmen. Bei solchen Load-Sensing-Systemen, vgl. beispielsweise DE 10 2006 032 599 A1, wird der in den Druckleitungen zu einem Hydraulikaktor herrschende Druck ― bei mehreren Hydraulikaktoren üblicherweise der höchste in den Druckleitungen herrschende Druck ― als Last- oder Steuerdruck auf eine Druckwaage gegeben, die bei Closed-Center-Systemen das Verstellelement der verstellbaren Pumpe betätigt und bei Open-Center-Systemen das Bypass-Ventil zum Tank verstellt. Sind alle Verbraucher bzw. Hydraulikaktoren abgesperrt, wird durch die Druckwaage im Closed-Center-System das Fördervolumen der Pumpe zurückgestellt und im Open-Center-System der überschüssige Volumenstrom zum Tank abgeleitet. Werden jedoch die Steuerventile zu einem oder mehreren Verbrauchern bzw. Hydraulikaktoren geöffnet, wird der aus den Druckleitungen zum am höchsten beaufschlagten Verbraucher anliegende Druck auf die Druckwaage gegeben, welche daraufhin die Pumpe verstellt, um einen größeren Volumenstrom zu fördern oder durch Verstellen eines Ventils weniger Volumen in den Tank zurückfördert.

Bei landwirtschaftlichen Anbaugeräten, die an einen Schlepper angebaut werden, entsteht hierbei häufig das Problem, dass das Ansprechverhalten des schlepperseitigen Hydraulikversorgungssystems nicht zum Anbaugerät passt bzw. von Schlepper zu Schlepper variiert, sodass die Hydraulikantriebe des Anbaugeräts unterschiedlich betätigt werden, je nachdem wie das schlepperseitige Hydrauliksystem auf die Load-Sensing-Funktion anspricht.

Bei Schleppern mit Closed-Center-Load-Sensing-Systemen ist der von der Schlepperpumpe gelieferte Volumenstrom vom Regel Δp des Schleppers und den Leistungsverlusten in der Druckleitung zum Anbaugerät sowie in der Steuerleitung abhängig. Wird ein Schlepper verwendet, bei dem die Regel-Druckdifferenz Δp recht klein oder zu gering eingestellt ist, wird entsprechend weniger Volumenstrom zum Anbaugerät gefördert, was die von den jeweiligen Hydraulikantrieben bzw. -aktoren betätigten Funktionen des Anbaugeräts wesentlich langsamer ablaufen lässt.

Ein zu langsames und/oder zeitversetztes Betätigen der Arbeitsaggregate hat jedoch zum Teil gravierende Leistungseinbußen zur Folge. Obwohl das Anbaugerät an sich für höhere Leistungen ausgelegt ist, können dessen Leistungsfähigkeiten nicht ausgenutzt werden, wobei es oft schon reicht, wenn nur eines der Arbeitsaggregate der Maschine nicht ausreichend schnell betätigt werden kann. Bei einer landwirtschaftlichen Maschine wie beispielsweise einem Ladewagen sind oft mehrere bzw. eine Vielzahl von Arbeitsaggregaten hydraulisch betätigt, beispielsweise der Kratzboden, schwenkbare Laderaumwände, Dosierwalzen oder ggf. auch geschwindigkeitsvariable Beschickungsförderer. Können beim Beladen üblicherweise nur sporadisch betätigte Antriebsaktoren wie beispielsweise der Kratzbodenantrieb oder der Schwenkwandantrieb für eine schwenkbare Laderaumwand nicht schnell genug betätigt werden, kann es zu einer ungleichmäßigen Verdichtung des aufzunehmenden Ernteguts und damit einer mangelhaften Beladung oder gar zu Verstopfungen und damit Totzeiten kommen.

Um Hydraulikantriebe bei Bedarf rasch betätigen zu können, wurden bereits verschiedene Maßnahmen vorgeschlagen. Beispielsweise zeigt die EP 30 14 976 B1 eine landwirtschaftliche Maschine, die zusätzlich zur Betriebsdruckversorgung eine Schnellbetätigungsvorrichtung mit Hochdruckspeichern zum raschen Betätigen von Aushubzylindern besitzt.

Der vorliegenden Erfindung liegt die Aufgabe zugrunde, eine verbesserte landwirtschaftliche Maschine der eingangs genannten Art zu schaffen, die Nachteile des Standes der Technik vermeidet und letzteren in vorteilhafter Weise weiterbildet. Insbesondere soll unabhängig vom Ansprechverhalten des Hydrauliksystems des Schleppers eine ausreichend schnelle Betätigung der hydraulischen Aktoren der Maschine ermöglicht werden.

Erfindungsgemäß wird die genannte Aufgabe durch eine landwirtschaftliche Maschine gemäß Anspruch 1 gelöst. Bevorzugte Ausgestaltungen der Erfindung sind Gegenstand der abhängigen Ansprüche.

Es wird also vorgeschlagen, den Druck in der Lastfühl-Leitung zu manipulieren und bei Bedarf so weit anzuheben, dass das Load-Sensing-System in der gewünschten Weise anspricht. Durch ein solches Manipulieren des Steuerdrucks bzw. des Drucks in der Lastfühl-Leitung kann ein träges Ansprechverhalten und eine an sich zu geringe Regel-Druckdifferenz Δp ausgeglichen werden. Erfindungsgemäß ist eine Druckverstärkungseinrichtung zum Verstärken des Drucks in der Lastfühl-Leitung vorgesehen. Durch die von der Druckverstärkungsvorrichtung erreichte Druckverstärkung in der bisweilen als LS-Leitung bezeichneten Steuer- bzw. Lastfühl-Leitung des Load-Sensing-Systems wird im Closed-Center-System die Hydraulikpumpe, insbesondere die Schlepperpumpe weiter ausgeschwenkt und mehr Volumenstrom zum Anbaugerät gefördert, wodurch mehr Hydraulikleistung an der landwirtschaftlichen Maschine zur Verfügung steht und Verbraucher bzw. hydraulische Aktoren mit hohem Volumenstrombedarf schneller laufen können. Die Druckverstärkung kann den Druck in der Load-Sensing-Leitung gegenüber dem Druck im Aktor erhöhen, beispielsweise auch dann, wenn der Aktor abgesperrt oder gedrosselt bzw. ein Steuerventil zum Steuern des Aktors geschlossen ist, und/oder einen Druckverlust am Steuerventil zumindest teilweise kompensieren und/oder den Druck am Steuerventil des Aktors vorbei erhöhen. Insbesondere kann die Druckverstärkungseinrichtung den Druck in der Load-Sensing-Leitung gegenüber dem "normalen" Last- oder Steuerdruck, der vom Aktor bzw. dessen Steuerventil her kommt, erhöhen, um die zu geringe Regel-Druckdifferenz Δp auszugleichen bzw. abzumildern.

In vorteilhafter Weiterbildung der Erfindung kann die genannte Druckverstärkungsvorrichtung verstellbar ausgebildet sein, sodass die Druckverstärkung in der LastfühlLeitung verstellbar ist und nicht permanent in gleicher Höhe vorgesehen ist, da dies das an sich gewünschte Herunterfahren der Pumpenleistung bei abgeschalteten Verbrauchern verhindern würde. Die Druckverstärkung kann durch die verstellbare Druckverstärkungseinrichtung nur bei Bedarf zugeschaltet und/oder in der Höhe passend verändert werden, um das gewünschte Ansprechverhalten des jeweiligen Hydraulikaktors zu erzielen.

Insbesondere kann die verstellbare Druckverstärkungseinrichtung dazu genutzt werden, die Arbeitsgeschwindigkeit des jeweiligen hydraulischen Aktors bzw. Hydraulikantriebs zu variieren. In Weiterbildung der Erfindung kann dem zumindest einen hydraulischen Aktor der landwirtschaftlichen Maschine ein Geschwindigkeitssteuergerät zum Einstellen der Arbeitsgeschwindigkeit zugeordnet sein, wobei die Steuereinrichtung zum Steuern des Hydraulikkreises dazu ausgebildet sein kann, die genannte Druckverstärkungsvorrichtung in Abhängigkeit eines von dem Geschwindigkeitssteuergerät vorgegebenen Soll-Geschwindigkeitssignals einzustellen. Wird vom Geschwindigkeitssteuergerät eine hohe Arbeitsgeschwindigkeit des hydraulischen Aktors gefordert, kann die Steuereinrichtung die Druckverstärkungseinrichtung so verstellen, dass in der Lastfühl-Leitung ein entsprechend höherer Druck anliegt. Wird andererseits vom Geschwindigkeitssteuergerät eine geringere Soll-Geschwindigkeit des Hydraulikaktors vorgegeben bzw. für ausreichend gehalten, wird die Druckverstärkungsvorrichtung von der Steuereinrichtung abgeschaltet, um eine Druckverstärkung in der Lastfühl-Leitung abzustellen oder so verstellt, dass die Druckverstärkungsvorrichtung nur eine geringere Druckverstärkung in der Lastfühl-Leitung vorsieht.

Vorteilhafterweise kann die Druckverstärkungsvorrichtung dazu ausgebildet sein, mehrere Druckverstärkungsstufen in der Lastfühl-Leitung vorzusehen, beispielsweise eine schwache Druckverstärkung und eine hohe Druckverstärkung, sodass zusammen mit einem vollständigen Abschalten der Druckverstärkungseinrichtung drei verschiedene Druckstufen in der Lastfühl-Leitung einstellbar sind. Bei vollständigem Abschalten der Druckverstärkungsvorrichtung herrscht in der Load-Sensing-Leitung der "normale", unverstärkte Steuerdruck wie in herkömmlichen Load-Sensing-Systemen, während bei schwacher sowie hoher Druckverstärkung entsprechend erhöhte Last-bzw. Steuerdrücke bereitgestellt werden. Auch eine Abschaltbarkeit alleine ermöglicht bereits zwei verschiedene Druckstufen, nämlich den "normalen" Steuerdruck bei abgeschalteter Druckverstärkungsvorrichtung sowie einen erhöhten Steuerdruck bei eingeschalteter Druckverstärkungsvorrichtung. Hierdurch ergibt sich die Möglichkeit, entsprechende Geschwindigkeitsabstufungen für den zu betätigenden hydraulischen Aktor vorzusehen.

Die genannte geschwindigkeitsabhängige Ansteuerung der Druckverstärkungsvorrichtung zur Verstellung der Arbeitsgeschwindigkeit des zumindest einen Hydraulikaktors kann manuell oder automatisch oder auch halbautomatisch erfolgen. Insbesondere kann das Soll-Geschwindigkeitssignal des genannten Geschwindigkeitssteuergeräts, in Abhängigkeit dessen die Druckverstärkungsvorrichtung verstellt wird, auf verschiedene Weise bereitgestellt werden. Beispielsweise kann das Geschwindigkeitssteuergerät über ein Eingabemittel wie beispielsweise ein Touchscreen oder einen Stellknopf einen Geschwindigkeitswunsch des Schlepperführers abfragen bzw. einen eingegebenen Geschwindigkeitswunsch des Schlepperführers in ein entsprechendes Soll-Geschwindigkeitssignal umsetzen.

Alternativ oder zusätzlich kann das genannte Geschwindigkeitssteuergerät aber auch einen automatischen oder halbautomatischen Betriebsmodus aufweisen, indem in Abhängigkeit zumindest eines Betriebsparameters der landwirtschaftlichen Maschine ein Soll-Geschwindigkeitssignal bereitgestellt, ggf. im halbautomatischen Betrieb dem Maschinenführer angezeigt und zur Bestätigung abgefragt wird, erzeugt werden kann. Stellt beispielsweise eine Erfassungseinrichtung einen rasch ansteigenden Erntegutdruck im Laderaum eines Ladewagens fest, der ein rasches Betätigen des Kratzbodens erfordert, kann das genannte Geschwindigkeitssteuergerät ein Soll-Geschwindigkeitssignal "hohe Geschwindigkeit nötig" abgeben, woraufhin die Steuereinrichtung die Druckverstärkungseinrichtung betätigt, um in der Lastfühl-Einrichtung einen hohen Druck zu erzeugen bzw. dort zu verstärken, um ein rasches Betätigen des Kratzbodenantriebs zu ermöglichen.

Erfasst die genannte oder eine weitere Erfassungseinrichtung einen anderen relevanten Betriebsparameter der landwirtschaftlichen Maschine, der ein rasches Verstellen eines oder mehrerer hydraulischer Stellaktoren erfordert, kann die genannte Geschwindigkeitssteuereinrichtung in analoger Weise ein Soll-Geschwindigkeitssignal abgeben, welches eine höhere Arbeitsgeschwindigkeit angibt, worauf hin die elektronische Steuereinrichtung die genannte Druckverstärkungsvorrichtung aktivieren oder auf ein höheres Druckverstärkungsniveau einstellen kann.

In vorteilhafter Weiterbildung der Erfindung kann die genannte Druckverstärkungsvorrichtung eine Ventileinrichtung umfassen, mittels derer im Hydrauliksystem bereitstehender Hydraulikdruck auf die Lastfühl-Leitung gegeben werden kann, insbesondere dosiert und/oder an- und abgeschaltet werden kann, um den Druck in der Lastfühl-Leitung entsprechend zu manipulieren.

Der von der genannten Ventileinrichtung auf die Lastfühl-Leitung gebbare Manipulationsdruck kann beispielsweise aus einem Druckspeicher kommen, wenn eine kurzzeitige Druckerhöhung in der Steuerleitung ausreichend ist. Insbesondere kann die genannte Ventileinrichtung aber auch den von der Hydraulikquelle kommenden Systemdruck, insbesondere den Pumpendruck oder einen davon abgeleiteten, noch vor den Schaltventilen zum Schalten des Hydraulikaktors anliegenden Druck auf die Lastfühl-Leitung geben und ggf. entsprechend dosieren.

Vorteilhafterweise kann die Druckverstärkungsvorrichtung dazu ausgebildet sein, den im Hydrauliksystem bereitstehenden Hydraulikdruck am Steuer- bzw. Schaltventil zum Steuern/Schalten des zumindest einen Aktors bzw. allen Steuer-/Schaltventilen des Aktors bzw. aller Aktoren vorbei auf die Lastfühl-Leitung zu geben. Hierdurch wird der am Steuer- bzw. Schaltventil auftretende Druckabfall vermieden.

Die genannte Ventileinrichtung kann eingangsseitig mit einem Druckanschluss, der vom Pumpendruck beaufschlagbar ist, verbunden sein, insbesondere unter Umgehung von Schaltventilen, über die der am Druckanschluss anstehende Pumpendruck bzw. Systemdruck auf den Hydraulikaktor oder die Hydraulikaktoren gegeben werden kann. Durch die genannte Verbindung der Ventileinrichtung mit dem Druckanschluss des Hydraulikkreises kann der in der Lastfühlleitung anliegende Druck bis zum Druckniveau in der P-Leitung bzw. bis zum Pumpendruck abzüglich etwaiger Verluste bis zum Druckanschluss hochgefahren werden. Durch diese Verstärkung kann im geschlossenen bzw. Closed-Center-System die Schlepperpumpe weiter ausgeschwenkt und entsprechend mehr Volumenstrom zum Anbaugerät gefördert werden.

Die genannte Ventileinrichtung kann ein Mehrwege-Schaltventil umfassen, welches eingangsseitig mit dem Druckanschluss des Hydraulikkreises und ausgangsseitig mit der Lastfühl-Leitung verbunden ist.

In Weiterbildung der Erfindung kann ein 3-/2-Wegeventil vorgesehen sein, welches mit zwei Eingangsanschlüssen einerseits mit dem Druckanschluss des Hydraulickreises bzw. einer Hydraulikquelle und andererseits der von dem zumindest einen Hydraulikaktor kommenden Load-Sensing- bzw. Lastfühl-Leitung verbunden und mit seinem Ausgangsanschluss mit der genannten Load-Sensing- bzw. Lastfühl-Leitung verbunden sein kann. Je nach Schaltstellung kann das genannte 3-/2-Wegeventil den Druck vom Druckanschluss bzw. der Druckquelle der auf die Load-Sensing-Leitung durchschalten oder den "normalen", von dem zumindest einen Hydraulikaktor her kommenden Lastfühl-Druck auf die Load-Sensing- bzw. Lastfühl-Leitung geben.

Alternativ oder zusätzlich zu einem solchen Schaltventil kann die Ventileinrichtung aber auch ein Dosierventil und/oder ein Drucksteuerventil umfassen, welches den vom Druckanschluss bzw. der Druckquelle her kommenden Druck steuern und/oder dosiert reduzieren kann, um verschiedene Druckverstärkungen in der Lastfühl-Leitung vorsehen zu können.

Die genannte Ventileinrichtung kann vorteilhafterweise elektronisch ansteuerbar sein. Insbesondere kann das genannte Schaltventil und/oder Steuerventil von einer elektronischen Steuereinrichtung gesteuert und verstellt werden. Alternativ wäre es aber auch möglich, eine hydraulische oder eine mechanische Betätigung des genannten Ventils bzw. der Ventileinrichtung der Druckverstärkungseinrichtung vorzusehen. Beispielsweise könnte ein Druckmittelzylinder oder auch ein mechanischer Stellhebel die genannte Ventileinrichtung verstellen, beispielsweise durch eine manuelle Betätigung des Schlepperführers oder aufgrund eines von der Steuereinrichtung der landwirtschaftlichen Maschine bereitgestellten Stellsignals.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer landwirtschaftlichen Maschine in Form eines an einen Schlepper angebauten Anbaugeräts, das nach einer vorteilhaften Ausführung der Erfindung als Ladewagen ausgebildet ist,
- Fig. 2:: eine Darstellung des Hydraulikkreises des Anbaugeräts aus Fig. 1, der ein Boost-Ventil zum Manipulieren des Drucks in der Lastfühl-Leitung für das Load-Sensing-System aufweist, und
- Fig. 3:: eine Darstellung des Load-Sensing-Blocks des Hydraulikkreises und der durch das genannte Boost-Ventil erzielbaren Regel-Druckdifferenz Δp_{LS}.

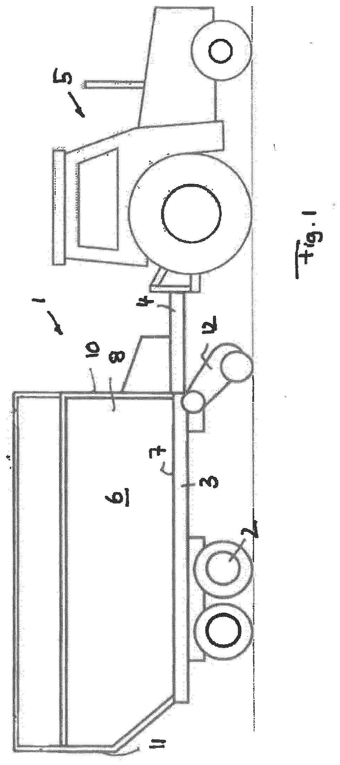

Wie Figur 1 zeigt, kann die landwirtschaftliche Maschine 1 als Anbaugerät ausgebildet sein, welches über eine Anbauvorrichtung 4 beispielsweise in Form einer Deichsel an einen Schlepper 5 angebaut werden kann. Das genannte Anbaugerät kann dabei ein Fahrwerk 2 umfassen, das einen Maschinenrahmen 3 trägt, der über die genannte Deichsel an den Schlepper 5 anbaubar ist.

Insbesondere kann die Maschine 1 als Ladewagen ausgebildet sein, wobei auf dem Maschinenrahmen 3 ein Laderaum 8 angeordnet sein kann, der rechts und links von zwei aufrechten Seitenwänden 6 sowie vorne und hinten von einer Frontwand 10 und einer Heckklappe 11 begrenzt sein kann. In an sich bekannter Weise kann im Bereich eines vorderen Endes des Laderaums 8 eine Aufnahmevorrichtung 12 vorgesehen sein, die eine anhebbare und absenkbare Pickup umfassen kann, mittels derer am Boden liegendes Erntegut wie Heu, Gras oder Stroh vom Boden aufgenommen und in den Laderaum 8 hineingefördert werden kann.

Die Heckklappe 11 kann dabei durch einen hydraulischen Stellaktor 9 beispielsweise in Form eines Hydraulikzylinders auf- und zugeschwenkt werden, wenn der Laderaum entladen werden soll. Alternativ oder zusätzlich wäre es auch möglich, dass die Frontwand 10 in ihrer Neigung verstellt und/oder verschwenkt und/oder in Teilen abgeklappt und durch einen entsprechenden Stellaktor 9 beispielsweise in Form eines oder mehrerer Hydraulikzylinder verstellt werden kann.

Am Boden des Laderaums 8 kann ein Kratzboden 7 vorgesehen sein, der beispielsweise mehrere Querleisten umfassen kann, die von einem endlos umlaufenden Fördermittel beispielsweise in Form eines Seils oder einer Kette verfahrbar sind. Ein Hydraulikaktor 13 beispielsweise in Form eines Hydraulikmotors kann als Kratzbodenantrieb vorgesehen sein.

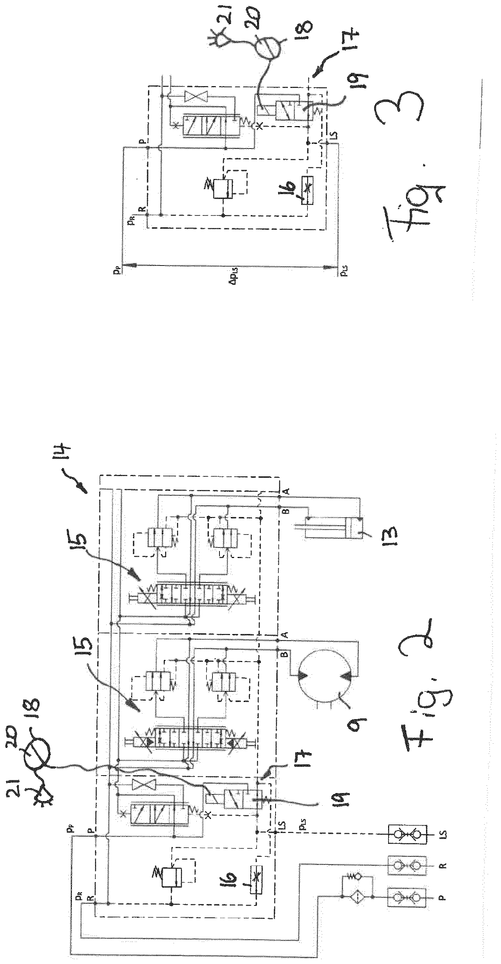

Wie die Figuren 2 und 3 zeigen, können die genannten Hydraulikaktoren 9 und 13 der landwirtschaftlichen Maschine 1 durch einen Hydraulikkreis 14 betätigt werden, der an die Hydraulikversorgung des Schleppers 5 angeschlossen werden kann. Der genannte Hydraulikkreis 14 kann dabei einen Druckanschluss P, einen Rückleitungs- bzw. Tankanschluss R sowie einen Load-Sensing-Anschluss LS aufweisen, um an entsprechende Druck-, Tank-, und Load-Sensing- bzw. Steueranschlüsse des Schleppers 5 angeschlossen zu werden.

Der über den Druckanschluss P bereitgestellte Versorgungsdruck des Schleppers kann über eine Schaltventilanordnung 15 auf den Hydraulikaktor 13 des Kratzbodenantriebs und/oder auf den Stellaktor 9 zum Verschwenken der Laderaumwandung gegeben werden, um den Kratzboden 7 anzutreiben und/oder die Laderaumklappe bzw. -wandung 10 oder 11 verschwenken zu können, wobei die genannte Schaltventilanordnung 15 Mehrweg-Schaltventile und/oder Richtungsumkehrventile und/oder Volumenstrom und/oder Drucksteuerventile umfassen kann, um den Kratzboden 7 und die Klappwand mit der gewünschten Geschwindigkeit und/oder in der gewünschten Richtung antreiben bzw. verstellen zu können.

Wie Figur 2 zeigt, wird das aus druckbeaufschlagten Hydraulikaktoren 9 bzw. 13 verdrängte bzw. abströmende Druckfluid über den Tankanschluss R zum Tank des Hydrauliksystems rückgeführt.

Zum anderen zweigt von den Druckleitungen, die von der Schaltventilanordnung 15 zu den Hydraulikaktoren 9 und 13 führen, jeweils eine Lastfühlleitung LS ab, die den in den genannten Druckleitungen anliegenden Lastdruck auf eine Druckwaage gibt, wobei der genannten Druckwaage eine Drossel- bzw. Blende 16 vor- oder nachgeschaltet sein kann. Der genannte Lastdruck wird dabei auf den Load-Sensing- bzw. Steueranschluss LS gegeben, um den Volumenstrom und/oder den Druck des Versorgungskreises, insbesondere der Versorgungspumpe einzustellen.

Vorteilhafterweise kann das Load-Sensing-System geschlossen ausgebildet, d.h. als sogenanntes Closed-Circuit-System ausgebildet sein, welches eine verstellbare Versorgungspumpe aufweist, so dass der genannte Lastdruck über die Druckwaage den Stellzylinder der Verstellpumpe betätigen und damit die Verstellpumpe verstellen kann.

Die genannte Verstellpumpe kann insbesondere Teil des Hydrauliksystems des Schleppers 5 sein.

Wie Fig. 3 zeigt, ist die Regel-Druckdifferenz Δp_{LS} die Druckdifferenz zwischen dem Pumpendruck bzw. dem Druck p_{P}, der am Druckanschluss P vorliegt, und dem genannten Lastdruck p_{LS}, der in der Lastfühlleitung anliegt.

Um den in der Lastfühlleitung LS anliegenden Lastdruck p_{LS} manipulieren und damit die Regel-Druckdifferent Δp_{LS} anpassen zu können, umfasst der Hydraulikkreis 14, insbesondere der maschinenseitige Teil des Hydraulikkreises 14, eine Druckverstärkungsvorrichtung 17, durch die der Druck in der Lastfühlleitung LS verstärkt werden kann, insbesondere über das Niveau angehoben werden kann, welches von den Druckleitungen zwischen der Schaltventilanordnung 15 und den Verbrauchern in Form der Hydraulikaktoren 9 und 13 bereitgestellt wird bzw. abgegriffen werden kann. Die genannte Druckverstärkungsvorrichtung 17 kann an der Schaltventilordnung 15 vorbei einen erhöhten Druck in der Lastfühlleitung LS erzeugen bzw. bereitstellen.

Die Druckverstärkungseinrichtung 17 kann verstellbar ausgebildet sein, um die Druckverstärkung variabel einstellen zu können, und kann insbesondere von einer elektronischen Steuereinrichtung 18 angesteuert bzw. verstellt werden, um das Druckniveau in der Lastfühlleitung LS in der gewünschten oder benötigten Weise manipulieren zu können. Grundsätzlich kann aber auch eine nicht-verstellbare Druckverstärkungseinrichtung 17 zum Einsatz kommen und hilfreich sein, um eine an sich zu geringe Regel-Druckdifferenz Δp auszugleichen bzw. abmildern zu können.

Wie die Figuren 2 und 3 zeigen, kann die genannte Druckverstärkungsvorrichtung 17 eine Ventileinrichtung beispielsweise umfassend ein Mehrwege-Schaltventil 19 aufweisen, welches den am Druckanschluss P anliegenden Systemdruck pₚ an der Schaltventilanordnung 15 vorbei auf die Lastfühlleitung LS geben kann. Das genannte Schaltventil 19 kann beispielsweise in Form eines 3/2-Wegeventils ausgebildet sein, dessen beiden Eingangs-Anschlüsse an den genannten Druckanschluss P und die von den Stellaktoren 9 und 10 herkommenden Lastfühlleitungen LS angeschlossen und dessen Ausgangsanschluss an den stromabseitigen Teil der Lastfühlleitung LS angeschlossen sein kann.

Das genannte Schaltventil 19 kann in einer Schaltstellung die Lastfühlleitung LS von den Druckleitungen her, die die Schaltventilanordnung 15 mit den Stellaktoren 9 und 13 verbinden, zum Lastfühl- bzw. Steueranschluss LS durchschalten und die Druckbeaufschlagung von dem Druckanschluss P her absperren. Diese Schaltstellung ist in Fig. 2 gezeigt.

Wird das genannte Schaltventil 19 betätigt, kann die von den Stellaktoren 9 und 10 herkommende, stromaufseitige Lastfühlleitung abgesperrt und stattdessen der Druckanschluss P auf dem stromabseitigen Teil der Lastfühlleitung LS durchgeschaltet werden, so dass der Systemdruck pₚ auf die Lastfühlleitung LS gegeben wird.

Alternativ oder zusätzlich zu einem solchen Wegeschaltventil könnte der Druck pₚ auch reduziert oder dosiert bzw. gesteuert durch ein Druck- oder Volumenstromventil auf die Lastfühlleitung LS durchgeschaltet werden, so dass nur ein Bruchteil des Systemdrucks pₚ bzw. des entsprechenden Volumenstroms von dem Druckanschluss P her auf die genannte Load-Sensing-Leitung LS gegeben wird.

Wie Figur 2 zeigt, kann die Druckverstärkung in Abhängigkeit einer gewünschten oder benötigten Arbeitsgeschwindigkeit der Stellaktoren 9 bzw. 13 oder einer Arbeitsgeschwindigkeit eines anderen Arbeitsaggregats der Maschine 1 gesteuert werden. Hierzu kann die die Drucksteuervorrichtung 17 ansteuernde Steuereinrichtung 18 einen Geschwindigkeitssteuerbaustein bzw. ein Geschwindigkeitssteuergerät 20 aufweisen, welches ein Soll-Geschwindigkeitssignal bereitstellt, in Abhängigkeit dessen die Steuereinrichtung 18 die Druckverstärkungsvorrichtung 17 ansteuert, insbesondere derart, dass mit zunehmend größerem Soll-Geschwindigkeitssignal eine zunehmend größere Druckverstärkung eingestellt wird, was je nach Ausbildung der Druckverstärkungsvorrichtung 17 stufenlos oder stufenweise erfolgen kann, beispielsweise durch ein Zuschalten des Systemdrucks pₚ oder Einstellen eines Zwischendrucks, der kleiner ist als der Systemdruck pₚ und/oder größer ist als der von den Verbrauchern her kommende Lastdruck.

Das genannte Geschwindigkeitssteuergerät kann dabei Maschinenführer-Befehlen folgen, die vom Maschinenführer über geeignete Eingabemittel wie beispielsweise ein Touchscreen eingegeben werden können. Alternativ oder zusätzlich kann das genannte Geschwindigkeitssteuergerät 20 das Soll-Geschwindigkeitssignal auch automatisch oder halbautomatisch erzeugen und der Steuereinrichtung 18 bereitstellen, insbesondere in Abhängigkeit des Signals einer Erfassungseinrichtung 21, die zumindest einen relevanten Betriebsparameter der Maschine 1 erfasst und ein entsprechendes Betriebsparametersignal bereitstellt. Beispielsweise kann die genannte Erfassungseinrichtung den Füllstand des Laderaums 8 des Ladewagens und/oder den im Laderaum 8 herrschenden Erntegutdruck und/oder die Größe eines vom Ladewagen aufzunehmenden Erntegutschwads bestimmen. Fallen die genannten Betriebsparameter oder zumindest einer hiervon groß bzw. intensiv aus, das heißt gibt es einen hohen Erntegutdruck oder einen hohen Füllstand oder einen großen Schwad, der aufzunehmen ist, sodass eine rasche Betätigung beispielsweise des Kratzbodens 7 nötig ist, kann die Steuereinrichtung in Abhängigkeit des entsprechend vorgegebenen Soll-Geschwindigkeitssignals die Druckverstärkungseinrichtung 17 derart betätigen, dass der Lastdruck manipuliert und entsprechend erhöht wird.

## Patentansprüche

1. Landwirtschaftliche Maschine, insbesondere Erntemaschine wie Ladewagen, mit zumindest einem hydraulischen Aktor (9, 13), der von einem Hydraulickreis (14) druckbeaufschlagbar ist, der eine Lastfühl-Leitung LS aufweist, sowie einer Steuereinrichtung (18) zum Steuern des Volumenstroms und/oder Drucks zum/im Hydraulikkreis (14) in Abhängigkeit eines Drucks in der Lastfühl-Leitung LS, **dadurch gekennzeichnet, dass** eine Druckverstärkungseinrichtung (17) zum Verstärken des Drucks in der Lastfühl-Leitung LS vorgesehen ist.

2. Landwirtschaftliche Maschine nach dem vorhergehenden Anspruch, wobei die Druckverstärkungseinrichtung (17) verstellbar ausgebildet ist, sodass die Druckverstärkung in der Lastfühl-Leitung LS einstellbar ist.

3. Landwirtschaftliche Maschine nach dem vorhergehenden Anspruch, wobei dem zumindest einen hydraulischen Aktor (9, 13) ein Geschwindigkeitssteuergerät (20) zum Einstellen der Arbeitsgeschwindigkeit zugeordnet ist, wobei die Steuereinrichtung (18) dazu ausgebildet ist, die Druckverstärkungsvorrichtung (17) in Abhängigkeit eines von dem Geschwindigkeitssteuergerät (20) vorgegebenen Soll-Geschwindigkeitssignals zu verstellen.

4. Landwirtschaftliche Maschine nach dem vorhergehenden Anspruch, wobei das Geschwindigkeitssteuergerät (20) einen Automatik-Betriebsmodus aufweist, in dem das Geschwindigkeitssteuergerät (20) das genannte Soll-Geschwindigkeitssignal in Abhängigkeit zumindest eines von einer Erfassungseinrichtung (21) erfassten Betriebsparameters der landwirtschaftlichen Maschine automatisch bereitstellt.

5. Landwirtschaftliche Maschine nach dem vorhergehenden Anspruch, wobei die Erfassungseinrichtung (21) dazu ausgebildet ist, einen Erntegutdruck und/oder einen Füllstand in einem Laderaum (8) der Maschine und/oder einen von der Maschine aufzunehmenden Erntegutschwad zu erfassen und das Geschwindigkeitssteuergerät dazu ausgebildet ist, das Soll-Geschwindigkeitssignal für den zumindest einen Stellaktor in Abhängigkeit des erfassten Erntegutdrucks und/oder des erfassten Füllstands und/oder des erfassten Schwads vorzugeben.

6. Landwirtschaftliche Maschine nach einem der vorhergehenden Ansprüche, wobei die Druckverstärkungsvorrichtung (17) dazu ausgebildet ist, einen Systemdruck, der im Hydraulikkreis (14) stromauf einer Schalt- und/oder Steuerventilanordnung (15) zum Schalten/Steuern des Aktors (9, 13) herrscht und/oder von der genannten Schalt- und/oder Steuerventilanordnung (15) unbeeinflußt ist, dosiert oder undosiert auf die Lastfühl-Leitung LS zu geben.

7. Landwirtschaftliche Maschine nach einem der vorhergehenden Ansprüche, wobei die Druckverstärkungsvorrichtung (17) eine Ventileinrichtung zum Beaufschlagen der Lastfühl-Leitung LS mit einem Druck von einer Druckquelle her und an einer/der Schalt- und/oder Steuerventilanordnung (15) zum Schalten/Steuern des Aktors (9, 13) vorbei aufweist.

8. Landwirtschaftliche Maschine nach dem vorhergehenden Anspruch, wobei die genannte Ventileinrichtung eingangsseitig mit einem Druckanschluss P des Hydraulikkreises (14) verbunden ist und dazu ausgebildet ist, den am Druckanschluss P des Hydraulikkreises (14) anliegenden Systemdruck pₚ dosiert oder vollständig auf die Lastfühl-Leitung LS zu geben.

9. Landwirtschaftliche Maschine nach einem der beiden vorhergehenden Ansprüche, wobei die Ventileinrichtung ein Mehrwege-Schaltventil (19), insbesondere ein Drei/Zwei-Wegeventil aufweist, welches Eingangsanschlüsse besitzt, die mit einem Druckanschluss P des Hydraulikkreises (14) und einem stromaufseitigen Teil der Lastfühl-Leitung LS verbunden sind, und/oder einen Ausgangsanschluss besitzt, der mit einem stromabseitigen Abschnitt der Lastfühl-Leitung LS verbunden ist.

10. Landwirtschaftliche Maschine nach einem der vorhergehenden Ansprüche, wobei die Druckverstärkungsvorrichtung (17) unter Umgehung einer Schaltventilanordnung (15) zum Steuern der Druckbeaufschlagung des zumindest einen Hydraulikaktors (9) mit einem Druckanschluss P des Hydraulikkreises (14), an dem der von der Druckquelle her kommende Systemdruck anliegt, verbunden ist.

11. Landwirtschaftliche Maschine nach einem der vorhergehenden Ansprüche, wobei die Druckverstärkungsvorrichtung (17) elektronisch ansteuerbar und die Steuereinrichtung (18) elektronisch ausgebildet ist.

12. Landwirtschaftliche Maschine nach einem der vorhergehenden Ansprüche, wobei der Hydraulikkreis (14) als geschlossener Load-Sensing-Kreis (CCLS) ausgebildet ist und eine verstellbare Pumpe aufweist, die in Abhängigkeit des in der Lastfühl-Leitung LS anliegenden oder manipulierten Lastdrucks p_{LS} verstellbar ist.

13. Landwirtschaftliche Maschine nach einem der vorhergehenden Ansprüche, die als Lade- und/oder Häckselwagen mit einem Kratzboden (7) und/oder einer verstellbaren und/oder klappbaren Laderaumwandung versehen ist, wobei der zumindest eine Stellaktor (9, 13) einen Kratzbodenantrieb und/oder einen Schwenkantrieb für die Laderaumwandung bildet.

14. Landwirtschaftliche Maschine nach einem der vorhergehenden Ansprüche, wobei der zumindest eine Stellantrieb (9, 13) ein Arbeitsaggregat antreibt, das während der Betriebszeit der landwirtschaftlichen Maschine überwiegend, beispielsweise mehr als 50% der Betriebszeit, abgeschaltet ist.

15. Landwirtschaftliche Maschine nach einem der vorhergehenden Ansprüche, wobei die Druckverstärkungsvorrichtung (17) ein- und ausschaltbar ausgebildet ist, so dass im ausgeschalteten Zustand in der Lastfühlleitung LS ein unverstärkter Steuerdruck anliegt und im eingeschalteten Zustand ein im Vergleich dazu erhöhter Steuerdruck anliegt.

## Claims

1. Agricultural machine, in particular harvesting machine such as a loader wagon, with at least one hydraulic actuator (9, 13), which can be pressurised by a hydraulic circuit (14), which comprises a load sensing line LS, and a control device (18) for controlling the volume flow and/or pressure to/in the hydraulic circuit (14) depending on a pressure in the load sensing line LS, **characterised in that** a pressure-boosting device (17) is provided for boosting the pressure in the load sensing line LS.

2. Agricultural machine according to the preceding claim, wherein the pressure-boosting device (17) is configured adjustably so that the pressure boost in the load sensing line LS is adjustable.

3. Agricultural machine according to the preceding claim, wherein a speed control apparatus (20) for setting the operating speed is associated with the at least one hydraulic actuator (9, 13), wherein the control device (18) is configured to adjust the pressure-boosting mechanism (17) depending on a target speed signal preset by the speed control apparatus (20).

4. Agricultural machine according to the preceding claim, wherein the speed control apparatus (20) comprises an automatic operating mode in which the speed control apparatus (20) automatically provides said target speed signal depending on at least one operating parameter of the agricultural machine detected by a detection device (21).

5. Agricultural machine according to the preceding claim, wherein the detection device (21) is configured to detect a harvested crop pressure and/or a filling level in a loading space (8) of the machine and/or a harvested crop swath to be taken up by the machine and the speed control apparatus is configured to preset the target speed signal for the at least one control actuator depending on the detected harvested crop pressure and/or the detected filling level and/or the detected swath.

6. Agricultural machine according to any one of the preceding claims, wherein the pressure-boosting mechanism (17) is configured to give a system pressure, which prevails in the hydraulic circuit (14) upstream of a switching and/or control valve arrangement (15) for switching/controlling the actuator (9, 13) and/or is uninfluenced by said switching and/or control valve arrangement (15), in a metered or unmetered manner to the load sensing line LS.

7. Agricultural machine according to any one of the preceding claims, wherein the pressure-boosting mechanism (17) comprises a valve device for acting upon the load sensing line LS with a pressure deriving from a pressure source and bypassing a/the switching and/or control valve arrangement (15) for switching/controlling the actuator (9, 13).

8. Agricultural machine according to the preceding claim, wherein the valve device is connected on the input side to a pressure connection P of the hydraulic circuit (14) and is configured to give the system pressure pₚ present at the pressure connection P of the hydraulic circuit (14) in a metered manner or fully to the load sensing line LS.

9. Agricultural machine according to one of the two preceding claims, wherein the valve device comprises a multiway switching valve (19), in particular a three/two-way valve, which comprises input ports that are connected to a pressure connection P of the hydraulic circuit (14) and an upstream portion of the load sensing line LS and/or comprises an output port that is connected to a downstream section of the load sensing line LS.

10. Agricultural machine according to any one of the preceding claims, wherein the pressure-boosting mechanism (17) is connected, bypassing a switching valve arrangement (15) for controlling the pressurisation of the at least one hydraulic actuator (9), to a pressure connection P of the hydraulic circuit (14) at which the system pressure deriving from the pressure source is present.

11. Agricultural machine according to any one of the preceding claims, wherein the pressure-boosting mechanism (17) is configured to be electronically activatable and the control device (18) is configured electronically.

12. Agricultural machine according to any one of the preceding claims, wherein the hydraulic circuit (14) is configured as a closed load sensing circuit (CCLS) and comprises an adjustable pump, which can be adjusted depending on the load pressure p_{LS} that is present in the load sensing line LS or is manipulated.

13. Agricultural machine according to any one of the preceding claims, which is provided as a loader and/or chipper wagon with a scraper floor (7) and/or an adjustable and/or hinged loading space wall, wherein the at least one control actuator (9, 13) forms a scraper floor drive and/or a pivot drive for the loading space wall.

14. Agricultural machine according to any one of the preceding claims, wherein the at least one control drive (9, 13) drives an operating unit that is mainly switched off during the operating period of the agricultural machine, for example for more than 50% of the operating time.

15. Agricultural machine according to any one of the preceding claims, wherein the pressure-boosting mechanism (17) is configured to be able to be switched on and off, so that in the switched-off state an unboosted control pressure is present in the load sensing line LS and in the switched-on state a control pressure is present that is increased in comparison with this.

## Revendications

1. Engin agricole, en particulier engin de récolte tel que remorque de chargement, avec au moins un actionneur hydraulique (9, 13), qui peut être soumis à l'action de la pression exercée par un circuit hydraulique (14), qui présente une ligne sensible à la charge LS, ainsi qu'avec un système de commande (18) pour commander le flux volumique et/ou la pression vers le/dans le circuit hydraulique (14) en fonction d'une pression dans la ligne sensible à la charge LS, **caractérisé en ce qu'**un système d'amplification de pression (17) est prévu pour amplifier la pression dans la ligne sensible à la charge LS.

2. Engin agricole selon la revendication précédente, dans lequel le système d'amplification de pression (17) est réalisé de manière ajustable de sorte que l'amplification de pression peut être réglée dans la ligne sensible à la charge LS.

3. Engin agricole selon la revendication précédente, dans lequel un appareil de commande de vitesse (20) pour régler la vitesse de travail est associé à l'au moins un actionneur hydraulique (9, 13), dans lequel le système de commande (18) est réalisé pour ajuster le dispositif d'amplification de pression (17) en fonction d'un signal de vitesse théorique prédéfini par l'appareil de commande de vitesse (20).

4. Engin agricole selon la revendication précédente, dans lequel l'appareil de commande de vitesse (20) présente un mode de fonctionnement automatique, dans lequel l'appareil de commande de vitesse (20) fournit automatiquement ledit signal de vitesse théorique en fonction d'au moins un paramètre de fonctionnement, détecté par un système de détection (21), de l'engin agricole.

5. Engin agricole selon la revendication précédente, dans lequel le système de détection (21) est réalisé pour détecter une pression de produit de récolte et/ou un état de remplissage dans un espace de chargement (8) de l'engin et/ou un andain de produit de récolte à loger par l'engin et l'appareil de commande de vitesse est réalisé pour prédéfinir le signal de vitesse théorique pour l'au moins un actionneur de réglage en fonction de la pression de produit de récolte détectée et/ou de l'état de remplissage détecté et/ou de l'andain détecté.

6. Engin agricole selon l'une quelconque des revendications précédentes, dans lequel le dispositif d'amplification de pression (17) est réalisé pour donner sur la ligne sensible à la charge LS de manière dosée ou de manière non dosée une pression de système, qui règne dans le circuit hydraulique (14) en amont d'un ensemble de soupapes de commutation et/ou de commande (15) pour commuter/commander l'actionneur (9, 13) et/ou qui n'est pas influencée par ledit ensemble de soupapes de commutation et/ou de commande (15).

7. Engin agricole selon l'une quelconque des revendications précédentes, dans lequel le dispositif d'amplification de pression (17) présente un système de soupape pour soumettre la ligne sensible à la charge LS à l'action d'une pression provenant d'une source de pression et le long d'un/de l'ensemble de soupapes de commutation et/ou de commande (15) pour commuter/commander l'actionneur (9, 13).

8. Engin agricole selon la revendication précédente, dans lequel ledit système de soupape est relié côté entrée à un raccord de pression P du circuit hydraulique (14) et est réalisé pour donner de manière dosée ou en totalité sur la ligne sensible à la charge LS la pression de système p_{P} appliquée sur le raccord de pression P du circuit hydraulique (14).

9. Engin agricole selon l'une quelconque des deux revendications précédentes, dans lequel le système de soupape présente une soupape de commutation à voies multiples (19), en particulier une soupape à trois/deux voies de distribution, laquelle possède des raccordements d'entrée qui sont reliés à un raccord de pression P du circuit hydraulique (14) et à une partie côté amont de la ligne sensible à la charge LS, et/ou possède un raccord de sortie, qui est relié à une section côté aval de courant de la ligne sensible à la charge LS.

10. Engin agricole selon l'une quelconque des revendications précédentes, dans lequel le dispositif d'amplification de pression (17) est relié à un raccord de pression P du circuit hydraulique (14), sur lequel la pression de système provenant de la source de pression est appliquée, en contournant un ensemble de soupapes de commutation (15) pour commander l'application de pression de l'au moins un actionneur hydraulique (9).

11. Engin agricole selon l'une quelconque des revendications précédentes, dans lequel le dispositif d'amplification de pression (17) peut être piloté de manière électronique et le système de commande (18) est réalisé de manière électronique.

12. Engin agricole selon l'une quelconque des revendications précédentes, dans lequel le circuit hydraulique (14) est réalisé en tant que circuit de détection de charge fermé (CCLS) et présente une pompe ajustable, qui peut être ajustée en fonction de la pression de charge p_{LS} appliquée ou manipulée dans la ligne sensible à la charge LS.

13. Engin agricole selon l'une quelconque des revendications précédentes, qui est pourvu en tant que remorque de chargement et/ou de hachage d'un fond racleur (7) et/ou d'une paroi d'espace de chargement ajustable et/ou rabattable, dans lequel l'au moins un actionneur de réglage (9, 13) forme un entraînement de fond racleur et/ou un entraînement de pivotement pour la paroi d'espace de chargement.

14. Engin agricole selon l'une quelconque des revendications précédentes, dans lequel l'au moins un entraînement de réglage (9 ,13) entraîne un module de travail, qui est éteint pendant le temps de fonctionnement de l'engin agricole, la plupart du temps, par exemple plus de 50 % du temps de fonctionnement.

15. Engin agricole selon l'une quelconque des revendications précédentes, dans lequel le dispositif d'amplification de pression (17) est réalisé de manière à pourvoir être activé et désactivé de sorte que dans l'état désactivé, une pression de commande non amplifiée est appliquée dans la ligne sensible à la charge LS et dans l'état activé, une pression de commande comparativement plus élevée est appliquée.
